# EUROPEAN PATENT SPECIFICATION

(11) **EP 1 105 240 B1**
(45) Date of publication and mention of the grant of the patent: **11.09.2002**
(21) Application number: 99920464.7
(22) Date of filing: 25.05.1999
(51) Int. Cl.: B23B 31/12, B23P 13/02

(54) **THREE-JAW CHUCK, A METHOD AND A DEVICE FOR CUTTING TEETH OF THE JAWS**
DREISPANNBACKENFUTTER, EINE METHODE UND EINE VORRICHTUNG ZUM SCHNEIDEN DER ZÄHNE DER SPANNBACKEN
MANDRIN A TROIS MORS, PROCEDE ET DISPOSITIF DE COUPE DES DENTS DES MORS

(30) Priority: 25.05.1998 BG 10248398
(43) Date of publication of application: 13.06.2001
(73) Proprietor: Voutev, Gueorgui Vassilev, 1421 Sofia (BG); Nachev, Valentin Rashev, 1421 Sofia (BG)
(72) Inventor: NACHEV, Valentin Rashev, 1421 Sofia (BG)
(74) Representative: Vossius, Volker, Dr.
(86) International application number: BG9900015
(87) International publication number: WO99061188

(56) References cited:
- US-A- 3 927 892
- US-A- 5 011 167

## Description

### FIELD OF THE INVENTION

The present invention relates to a three-jaw tightening chuck, a method and a device for cutting teeth of the gripping jaws, that can be used in machines operating with rotating tools such as drills, multiflute drills, countersink drills, reamers, as well as hand held drilling machines, NC machines, etc.

### STATE OF THE ART

A three-jaw tightening chuck for securing rotating tools is known, the shuck comprising a body with a main hole for coupling to the rotating driving machine and with three openings, the axes of which are inclined with respect to the longitudinal axis of the body. Gripping jaws are accommodated in the openings, one of the surfaces of the jaws being formed as a tooth sector engaged with the conical thread of a gear wheel. The tightening of the tool is carried out by rotating the gear wheel either manually or by key. The gripping jaws are characterised in that the teeth of the tooth sector have a pitch and a shape that match the conical thread of the engaged gear wheel. Besides, each tooth of the rack of the gripping jaws has a different curvature and an angle of inclination.

Another three-jaw tightening chuck for securing drills and other rotating tools is known (2), the chuck having design similar to the design of the above described chuck. In order to improve the accuracy in gripping and to prevent the rotation of the jaws around their axes the teeth in the tooth sectors of the gripping jaws have different characteristics from those of the previously described chuck. More important characteristics are the form of the surface on which the teeth are cut, the surface being determined by its radii and the position of its axis with respect to the axis of rotation during cutting and the axis of rotation of the cutting tool; the curvatures of the teeth, determined by their radii of rotation and the angles of inclination with respect to the longitudinal axis.

A three-jaw tightening chuck is also known for securing drills and other rotating tools (3), the chuck having design similar to the design of the above described chucks. The difference consists in the shape of the teeth in the tooth sector. The teeth are formed as a part of a cylindrical screw surface and their pitch and the shape of their profile match the conical thread of the engaged driving gear wheel. The teeth in the tooth sectors have constant angles of inclination which are equal to the angle of elevation of their cylindrical thread.

A jaw for a machine chuck of the Jacoby type having the teeth which mesh with the ring gear is disclosed in Pradota, US-A-3 927 892, on which is based the preamble of claims 1, 3 and 4. By variation of the tooth form of the jaws the varying pitch "circle" diameter of the ring gear thread is accommodated.

The above described known constructions of three-jaw tightening chucks are not effective enough with respect to the precision of gripping and rotating of the tool as well as to the smooth movement of the jaws in locking or releasing of the tool. The above mentioned drawbacks are caused mainly by the constructive design of the teeth in the tooth sectors.

As it was already stated, the curvature of the teeth and the angle of inclination of each tooth are different, therefore in motion the teeth of the gripping jaws contact stepless the screw surfaces of the conical thread, having constant pitches and different curvatures and angles of inclination in each section. As a result the engagement between the rack and the conical thread of the gear wheel changes during the stroke of the gripping jaws and the contact areas are disposed on a curved spatial line inclined with respect to the midnormal of the gripping jaw, the midnormal starting at the middle of the first tooth near the contact side of the jaw and ending at the right end of the last tooth in the tooth sector. The above described manner of contacting between the tooth sector and the conical thread of the gear wheel leads to an unbalanced loading of the teeth, which are subjected to the negative influence of a torque with respect to the longitudinal axis of the gripping jaw, thus worsening the contact with the tightened tool, respectively the accuracy of rotation. Another disadvantage is the rapid losing of the initial accuracy of rotation of the chuck caused by the unbalanced loading and by the wearing of the contacting parts.

A method for cutting teeth in the tooth sectors is known, the method comprising the following steps; a set of jaws is placed in a mandrel, the axes of the jaws being inclined with respect to the axis of rotation of the mandrel; a cutting tool, for example hobbing cutter is fed, the axis of rotation of the cutter being parallel to the axis of the gripping jaws; the cutting tool moves until the entire height of the teeth is cut; the mandrel rotates at one and one quarter revolutions, and all of the teeth in the tooth sector are cut by axially, pitch by pitch forward motion of the cutter.

A method for cutting teeth in tooth sectors is also known, which differs from the above described method in that a cylindrical thread is cut on the jaws gripped in the mandrel.

An arrangement for carrying out the above described method is known, the arrangement containing a special machine - universal lathe. The mandrel with the set of jaws to be cut is fixed on the spindle of the lathe. The rotating means of the cutting device is secured on the slide of the machine, and the axis of rotation of the cutting device is inclined with respect to the axis of rotation of the machine. A particular feeding mechanism ensures the synchronisation between the rotation of the spindle and the feeding motion of the cutting tool by one pitch parallel to the axes of the jaws to be cut.

The above described known constructions of the teeth of the gripping jaws and their geometric characteristics, as well as the methods and the devices for cutting teeth do not provide such forming of the teeth in order to achieve a high accuracy for gripping of the rotating tool, a smooth motion of the gripping jaws in locking and in releasing of the tool, and permanent maintaining of the initial accuracy of rotation of the chuck. In order to keep the standard requirements for accuracy for the three-jaw tightening chuck it is necessary its composite parts to have high classes of accuracy, which considerably increases the production expenses and the cost of the article.

Another drawback of the known three-jaw chucks is that the accuracy for gripping and rotation of the tightened tool become lower because of the rotation of the gripping jaws around their longitudinal axes caused by different reasons.

### SUMMARY OF THE INVENTION

In view of the above stated, it is an object of the present invention to provide an improved construction of a three-jaw tightening chuck, which is distinguished by a smooth motion of the gripping jaws, a higher reliability for tightening of the tool and precision of rotation and a longer period of maintaining the initial accuracy, excluding at the same time the possibility of lowering the accuracy in gripping and rotating of the tool caused by the rotation of the gripping jaws around their longitudinal axes. An object of the invention is to provide a method and a device for cutting teeth with reduced manufacturing costs, satisfying at the same time the standard requirements for the accuracy of the tightening chucks.

A further object of the invention is to provide a method and a device for cutting teeth in the tooth sectors, which achieve a sufficient accuracy in forming teeth of the gripping jaws.

These objects of the invention are achieved by providing a three-jaw tightening chuck for securing rotating tools comprising the features of claim 1, the method of claim 3 and the apparatus of claim 4. The chuck comprises a body with a main hole for coupling to the rotating driving machine, and three openings, the axes of which are inclined with respect to the longitudinal axis of the body. Tightening jaws having tooth sectors on their outer surface engaged with the conical thread of a gear wheel are accommodated in the openings. At the opposite side of the tooth sectors there is an inclined contact surface for contact with the tightened tool.

All teeth in the tooth sectors of the gripping jaws have identical pitches and shapes of the profile similar to these of the conical thread of the gear wheel, to which they are engaged. The teeth are formed on a cylindrical surface, the axis of which is parallel to the axis of the gripping jaw. Both axes lie in one plane passing their midperpendicular. The radius of the cylindrical surface is equal to the minimal internal radius of the conical thread. The teeth are arch-cut with a curvature determined by the rotation of the jaw around an axis at an angle with respect to the axis of the gripping jaw. The curvature has a radius equal to the minimal outer radius of the conical thread.

The angle of inclination of the teeth with respect to the longitudinal axis of the gripping jaw is equal to the angle of elevation of the conical thread, determined by its middle radius.

According to one embodiment of the invention the teeth in the tooth sector are perpendicular to the longitudinal axis of the gripping jaw.

The above described design of the teeth in the tooth sectors of the gripping jaws is achieved by a method for cutting teeth on gripping jaws. The method includes positioning of the gripping jaws, advancing them to a cutting tool, forward motion of a feeding forming mechanism and rotatable motion of the cutting tool, where the axis of rotation of the cutting tool is parallel to the axis of the jaw to be cut.

The method includes the following steps: positioning of one jaw along its longitudinal axis in the feeding forming mechanism, the axis of rotation of which is orientated at an angle with respect to the axis of the jaw to be cut, where the forward motion of the feeding forming mechanism is a rotatable oscillating motion at a certain angle; advancing of the jaw to be cut towards the cutting tool; cutting of the first tooth space; stopping of the advanced motion; axially moving of the jaw to be cut to a distance equal to one pitch of the conical thread; reversing of the forward rotating motion and cutting of the second tooth space; stopping of the forward rotating motion; and axially moving of the jaw to a distance at one pitch of the conical thread.

The repeating of the above described sequence of operations leads to cutting of all teeth in the tooth sector with uniform radius of rotation with respect to the axis at an angle of the feeding forming mechanism.

The above described method for cutting teeth on gripping jaws is carried out by a device for cutting of uniform teeth, the device including a casing, on which feeding forming mechanisms connected to cutting mechanisms are mounted, the mechanisms being controlled by a hydraulic and an electric systems.

There are three pairs of mechanisms on the casing, each pair containing one feeding forming mechanism and one cutting mechanism. The feeding forming mechanism is disposed in such a way that its axis and the axis of rotation of the cutting tool lie in one plane, and the arrangements of the base support elements of the feeding forming mechanisms with respect to the front parts of the cutting tools for the second and for the third pair of mechanisms differ from that for the first pair by one third and two thirds, respectively, of the pitch of the conical thread.

According to one embodiment of the inventive device there is only one pair of mechanisms mounted on the casing, the pair including one feeding forming mechanism and one cutting mechanism.

The feeding forming mechanism includes a carrier body with a built-in cylindrical tailstock barrel, to which base positioning movable and immovable elements are fixed. A driving cylinder is axially mounted to the tailstock barrel and is immovably connected to a pitch dividing mechanism, and the carrier body is accommodated in a bearing case with a build-in feeding group.

The positioning elements: a tightening cylinder, an immovable base support, an immovable base support having a semicylindrical hole and a movable base support formed as a prism are all arranged on the tailstock barrel. The disposition of the base supports determines the position of the axis of the jaw to be cut and the angle of inclination of the teeth to be cut.

According to one embodiment of the invention the axis of the base positioning elements of the feeding forming mechanism lies in one plane with the axis of the cutting tool and the axis of the feeding forming mechanism.

The pitch dividing mechanism includes a casing, in which a pitch templet connected to a piston rod of a driving cylinder and to a cylindrical tailstock barrel is mounted.

The feeding group of the feeding forming mechanism is mounted in a bearing case, in which a rack is built-in to the piston rod of a driving cylinder; the rack being engaged to a gear wheel fixed on a bearing journal.

The cutting mechanism includes a casing attached to a base plate by means of guides. A spindle resting on bearings within the casing and having a cutting tool mounted on is driven by an electric driving group. The cutting mechanism allows longitudinal and transversal motion of the cutting tool with respect to the axis of the spindle.

The three-jaw tightening chuck according to the invention is an improved construction, which provides an increased strength for gripping and higher accuracy of rotation of the rotating tool.

The specific design of the gripping jaw in relation to the tooth sector and especially the forming of the teeth having geometric parameters according to the invention provides uniform contact areas of all teeth in their engagement with the helical surface of the conical thread. The contact areas are disposed on the midnormal of the rack and determine an uniformly-distributed loading of the teeth in tightening. This leads to a higher precision of rotation of the tightened tool, more smooth motion of the gripping jaws and a longer period of maintaining of the initial accuracy. By applying of the invention it is possible to manufacture the elements of the chuck at a lower class of accuracy with keeping the standard requirements for accuracy for the tightening chucks, thus reducing considerably the manufacturing costs. At the same time by using of the proposed construction of the tightening chuck the possibility of lowering the accuracy in gripping and rotation of the tool caused by the rotation of the gripping jaws around their longitudinal axis is excluded.

The proposed method and device for cutting teeth on gripping jaws allow cutting teeth at a sufficient accuracy and precision, where further grinding operation for the complete treatment of the teeth to be cut is possible. Thus the class of accuracy of the chuck is increased at the same time decreasing the frictional factor in engaging the teeth in the rack with the conical thread of the gear wheel.

The above described constructive features of the chuck result in increased tightening strength of the tool at reduced forces applied for tightening and releasing of the rotating tool.

### BRIEF DESCRIPTION OF THE DRAWINGS

An exemplary embodiment of the three jaws tightening chuck according to the invention is shown with reference to the accompanying drawings, wherein:

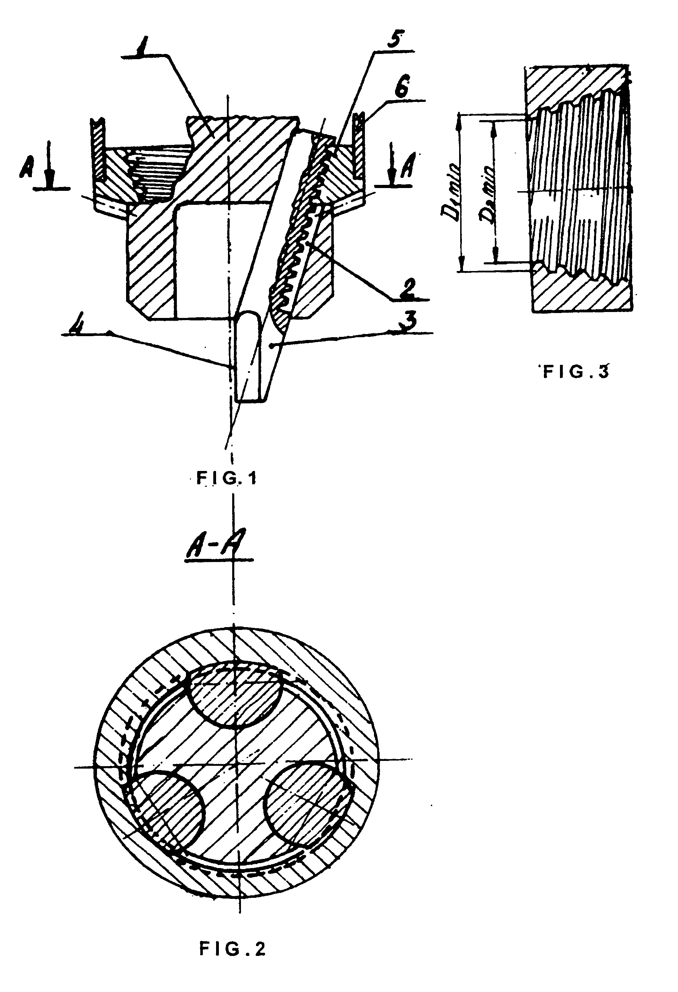

Figure 1 is a longitudinal section of a tightening chuck;
Figure 2 is a cross-sectional view of a tightening chuck;
Figure 3 is a longitudinal section of a conical gear wheelnut;
Figure 4 is a side view of the gripping jaw ready for cutting of the teeth;
Figure 5 is a cross-sectional view taken on line M-M of Figure 4;
Figure 6 is a side view of a jaw with cut teeth;
Figure 7 is a cross section taken on line N-N of Figure 4;
Figure 8 is a top view of the teeth in the gripping jaw;

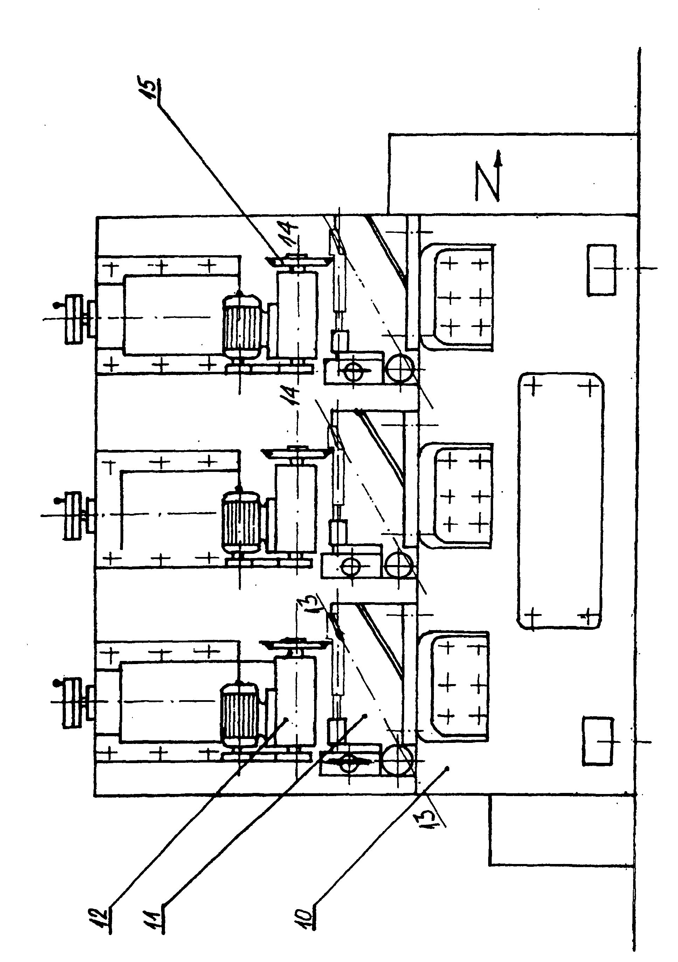

Figure 9 is a front view of a device for cutting teeth in a gripping jaw;

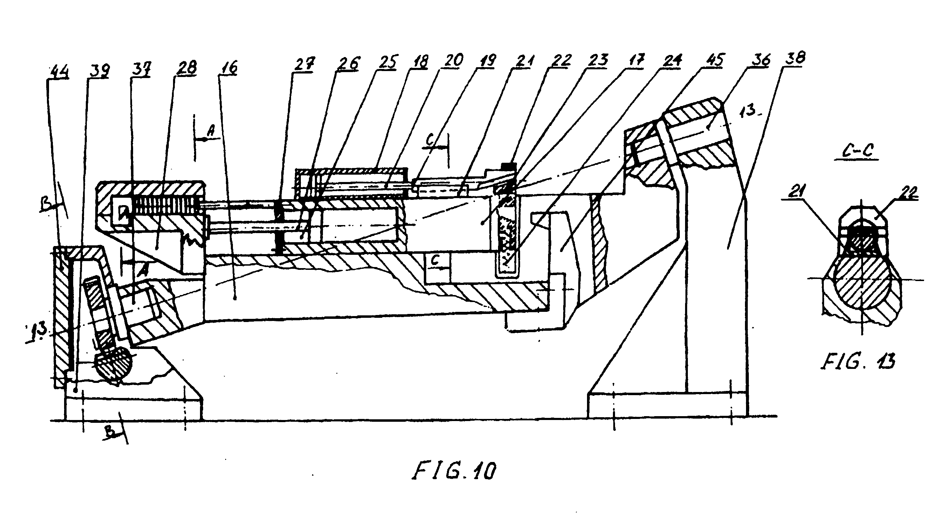

Figure 10 is a side view of partial sections of a feeding forming mechanism;

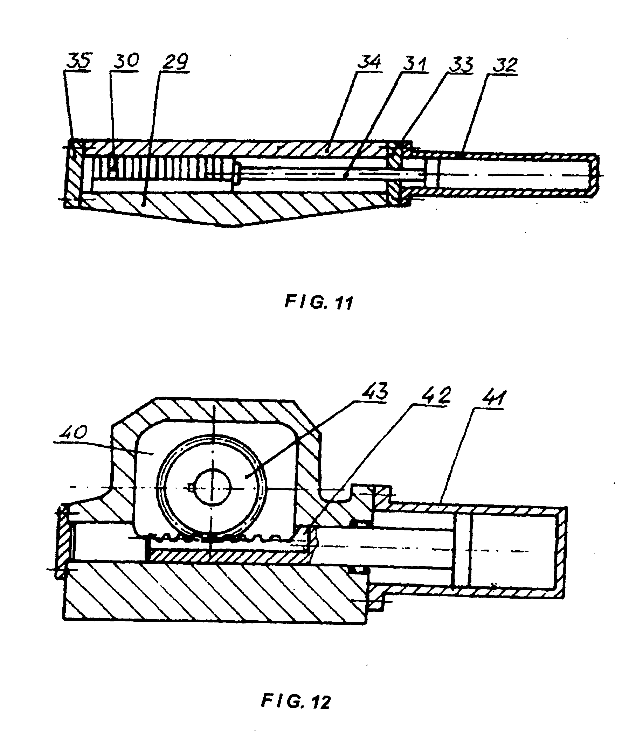

Figure 11 is a cross section taken on line A-A of Figure 10;
Figure 12 is a cross section taken on line B-B of Figure 10;

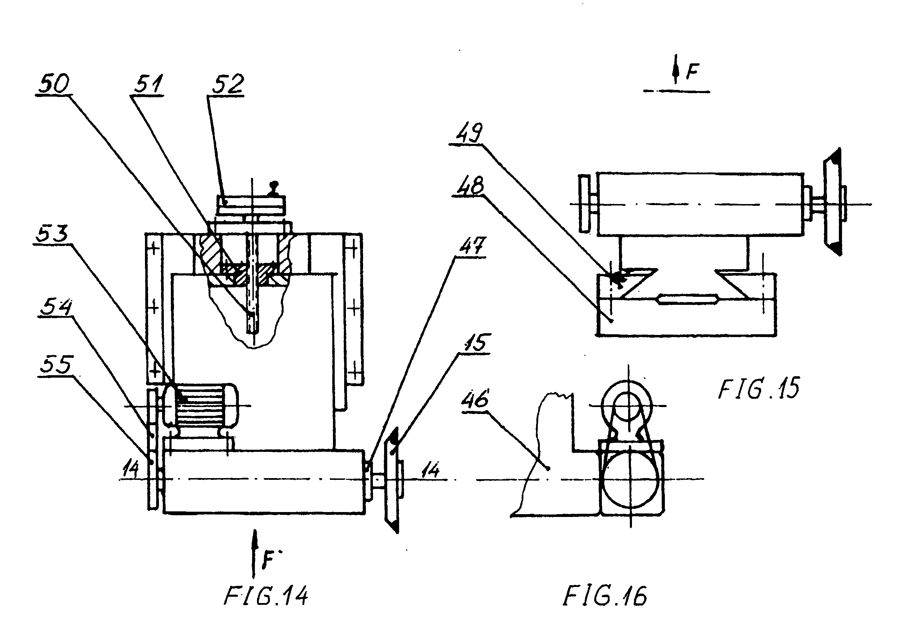

Figure 13 is a cross section taken on line C-C of Figure 10;
Figure 14 is a front view of the cutting mechanism;
Figure 15 is a view on line F of Figure 10;
Figure 16 is a view on line D of Figure 10.

### DESCRIPTION OF THE PREFERRED EMBODIMENT

Further in the description an exemplary embodiment of the invention is shown, concerning a three-jaw tightening chuck with a specific construction of the teeth in the gripping jaws, a method for cutting teeth of the jaws and a device for carrying out the method.

The three-jaw tightening chuck comprises a main body 1 with three openings 2, the axes of which are inclined with respect to the longitudinal axis of the body 1. Gripping jaws 3 are accommodated in the openings 2, the jaws 3 being provided with contact surfaces 4. Tooth sectors are formed on the outer surfaces of the jaws, and the teeth of the tooth sectors engage the conical thread of a gear wheel 5, to which a sleeve 6 is immovably attached.

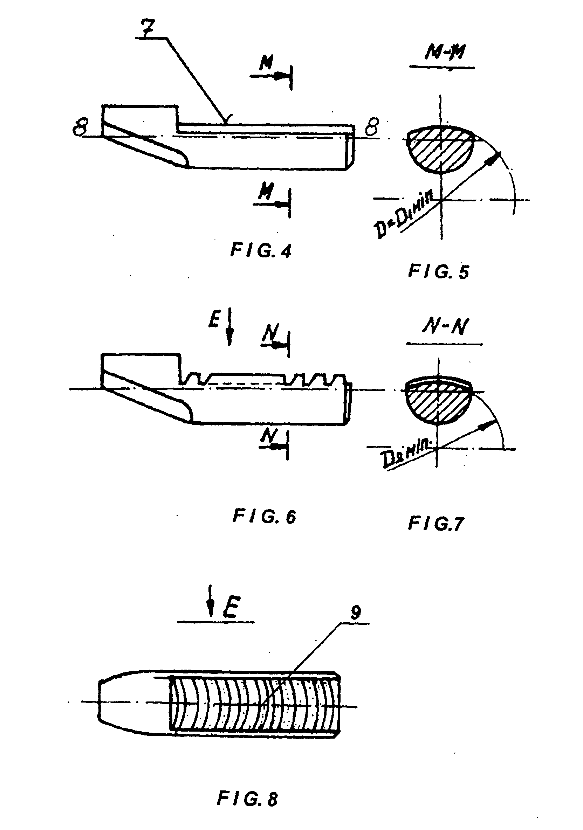

All teeth of the gripping jaws have identical pitch and shape of the profile similar to these of the conical thread to which they are engaged. The teeth are formed on a cylindrical surface 7 (Figure 4), the axis of which is parallel to the axis 8 of the gripping jaw 3. Both axes lie in one plane through their midperpendicular. The radius of the cylindrical surface 7 is equal to the minimal radius of the conical thread. The teeth are arch-cut with a curvature 9, (Figure 8) determined by the rotation of the jaw 3 around an axis at a certain angle with respect to the axis 8 of the gripping jaw 3, the curvature 9 having a radius equal to the minimal outer radius of the conical thread and an angle of inclination with respect to the longitudinal axis 8 of the jaw 3 equal to the angle of elevation of the conical thread, corresponding to its middle radius.

According to one embodiment of the invention the teeth of the gripping jaws 3 are cut perpendicularly to the axis 8 of the gripping jaw 3, i.e. without an inclination.

In order to achieve a high precision of rotation, a smooth motion of the gripping jaws and to retain the initial accuracy for a longer period, and to exclude the possibility of lowering the accuracy in gripping and rotation of the tool caused by the rotation of the gripping jaws around their longitudinal axes, there is provided a tightening chuck with teeth in the gripping jaws preferably incorporating the technical solution described in Bulgarian patent application ser. No 102 424.

The above described gripping jaws having specific designed teeth are cut according to a method for cutting of uniform teeth, where only one jaw is located and locked in a feeding forming mechanism. The jaw is advanced to a cutting mechanism simultaneously with the rotation of the cutting tool. According to the invention the cutting is carried out by a forward rotatable feeding of the feeding forming mechanism. After cutting of the first tooth space the rotating feed of the feeding forming mechanism is stopped and the jaw is axially moved at a distance equal to one pitch of the conical thread. The second tooth space is cut in a reversible rotating feed followed by stopping and again moving of the jaw to a distance of one pitch of the conical thread.

The above described sequence of operations repeats until all teeth are cut, the teeth having uniform radius of rotation with respect to the axis of the feeding forming mechanism; after that the ready jaw is released and is dismantled from the device either automatically or manually.

The above described method for cutting of uniform teeth on the gripping jaws 3 according to the invention is accomplished by a device for cutting uniform teeth, the device including a casing 10, on which three pairs of mechanisms are mounted. Each pair contains one feeding forming mechanism 11 and one cutting mechanism 12, the feeding forming mechanism 11 being disposed in such a way that its axis 13 and the axis of rotation 14 of the cutting tool lie in one plane. The arrangements of the base supports 22 and 23 of the feeding forming mechanisms 11 with respect to the front parts of the cutting tools 15 for the second and for the third pair of mechanisms differ from that for the first pair by one third and by two thirds, respectively, of the pitch of the conical thread.

The base supports 21, 22, 23 determine the disposition of the axes of the jaws to be cut 3 and the angle of inclination of the teeth, which is equal to the angle of elevation of the conical thread identified by its middle radius.

The feeding forming mechanism 11 includes a carrier body 16 with a built-in cylindrical tailstock barrel 17 and a tightening cylinder 18 mounted on it.

The tightening of the jaws to be cut 3 is achieved by its tightening between the head 19 of the piston rod 20 and the immovable base support 21, the immovable base support with semicylindrical hole 22 and the movable base support 23, the last being vertically orientated by means of a spring 24. A driving cylinder 25 is built-in along the axis of the tailstock barrel 17, and the piston rod 26 of the cylinder 25 passes through a cover 25 and is immovably connected to a pitch dividing mechanism 28.

The pitch dividing mechanism 28 includes a casing 29, where a pitch templet 30 is dismountably connected to a piston rod 31 of a hydraulic cylinder 32, the pitch templet 30 being closed by means of covers 33, 34, 35. The carrier body 16 of the feeding forming mechanism 11 rests on bearing journals 36, 37 in bearing cases 38, 39. A feeding arrangement 40 is built-in the bearing case 39. the feeding arrangement 40 including a driving cylinder 41 and a rack 42 mounted on the piston rod of the driving cylinder 41. The rack 42 is engaged with a gear wheel 43 immovably fixed in the bearing journal 37. The feeding arrangement 40 is closed by a cover 44. A pusher 45 is provided at one end of the carrier body 16 for forced transposition of the movable base support 23 when the cylindrical tailstock barrel 17 is at a front end position.

The cutting mechanism 12 includes a casing 46, in which a spindle 47 is placed resting on bearings. The cutting tool 15 is mounted on the spindle 47, and the casing 46 is attached to a base plate 48 by means of guides 49. The cutting mechanism 12 is adjusted by means of a screw 50 and built-in nut 51, the screw 50 being driven by a flywheel with vernier 52. The cutting tool 15 is driven by a motor 53 immovably mounted on the casing 46 and by a common transmission, i.e. a belt 54 and a pulley 55 fixed on the spindle 47.

The above described construction of the cutting mechanism allows for longitudinal and transversal displacement of the cutting tool 15 in order to achieve an uniform situating with respect to the jaw to be cut 3. The proposed constructive design is not limited in relation to variant technical solutions providing similar possibilities.

A further embodiment of the device includes a casing 10 containing only one pair of feeding forming mechanism 11 and a cutting mechanism 12, which can be adjusted to cut a set of jaws for one chuck.

When the teeth are cut at an angle with respect to the longitudinal axis 8 of the jaw 3, the axis of the base supports 21, 22, 23, which determines the position of the axis 8 in the feeding forming mechanism 11 is inclined with respect to the plane, in which the axis 13 of the feeding forming mechanism 11 and the axis 14 of the cutting mechanism 12 lie.

The device for cutting teeth on gripping jaws 3 is provided with a hydraulic system 56 and a lubricating system 57 shown schematically in the drawings. The entire electric control of the operations, especially the synchronisation of the motion of the working groups and mechanisms for cutting of the gripping jaws 3 is carried out by means of an electric system, not shown.

### APPLICATION OF THE INVENTION

The three-jaw tightening chuck is used as follows: the tightening chuck is secured in a known manner to the spindle of the operating machine through the main hole in its body 1. The tightened tool is engaged in the opening formed between the jaws 3, and the conical gear wheel 5 is driven by means of a suitable locking key inserted in the body 1. As a result of the engagement between the conical thread and the teeth of the gripping jaws 3 the jaws move linearly in the inclined openings 2 and engage and hold the tightened tool by their contact surfaces 4. Due to the fact that the teeth have uniform geometric characteristics and the teeth of the rack and of the conical thread have identical profiles and pitches, the engagement is in steady contact areas disposed along a midnormal of the rack, providing at the same time a constant and an uniformly-distributed loading of the teeth.

The device for cutting teeth of gripping jaws performs the sequence of operations already revealed in relation to the inventive method. The gripping jaws 3 are located either manually or automatically on the immovable base support 21 and by means of the head 19 of the piston rod 20 of the tightening cylinder 18 are tightened and fixed in the base supports 22, 23. The thus locked jaw 3 is transferred by means of the cylindrical tailstock barrel 17 to an initial position for cutting teeth. The cutting tool 15 is put in rotating motion and simultaneously the feeding forming mechanism 11 rotates forwardly at a preset angle and thus the first tooth space is cut. After that the forward motion of the feeding forming mechanism 11 stops and the pitch template 30 moves at one pitch by means of the piston rod 31 of the hydraulic cylinder 32. The gripping jaws 3 move to a distance of one pitch in order to cut the second tooth space by a reversible motion of the feeding forming mechanism 11. After that the forward rotating motion is stopped and the jaws 3 are transferred at one pitch. The above described sequence of operations repeats until all teeth of the rack are cut.

After completing the cutting of all teeth the tailstock barrel 17 returns to its initial position by means of the driving cylinder 25, and the pusher 45 moves the vertically orientated movable base support 23, formed as a prism. The piston rod 20 of the tightening cylinder 18 automatically releases the gripping jaw 3, having teeth cut on its external surface.

When the device includes only one pair of mechanisms for the cutting of each jaw 3 from the set of jaws for one chuck, the position of the front part of the cutting tool 15 is correspondingly adjusted with respect to the base prism of the feeding forming mechanism 11.

## Claims

1. A three-jaw tightening chuck comprising a body (1) with three openings (2), the axes of which are inclined with respect to the longitudinal axis of the body, where tightening jaws (3) having tooth sectors on their outer surface engaged with the conical thread of a gear wheel (5) are accommodated in the openings, and at the opposite side of the tooth sectors there is an inclined contact surface (4) for contact with the tightened tool, **characterised in that** all teeth in the tooth sectors of the gripping jaws (3) have uniform geometries and have identical pitch and shape of the profile similar to these of the conical thread of the gear wheel (5), to which they are engaged, the teeth being formed on a cylindrical surface (7), the axis of which is parallel to the axis (8) of the gripping jaw (3), where both axes lie in one plane passing their midperpendicular, and the radius of the cylindrical surface (7) is equal to the minimal internal radius of the conical thread, where the teeth are arch-cut with a curvature (9) determined by the rotation of the jaw around an axis (13) at an angle with respect to the axis (8) of the gripping jaw (3), and the curvature (9) has a radius equal to the minimal outer radius of the conical thread, where the angle of inclination of the teeth with respect to the longitudinal axis (8) of the gripping jaw (3) is equal to the angle of elevation of the conical thread, determined by its middle radius.

2. A three-jaw tightening chuck according to claim 1, **characterised in that** the teeth in the tooth sector are perpendicular to the longitudinal axis (8) of the gripping jaw (3).

3. A Method for cutting teeth on gripping jaws according to claim 1 including the following steps: positioning of the jaws (3), advancing them to a cutting mechanism (12), putting of a feeding forming mechanism (11) in a forward motion and the cutting mechanism (12) in rotating motion, where the axis of rotation is parallel to the axis (8) of the jaw to be cut, **characterised in that** one jaw (3) is positioned along its longitudinal axis in the feeding forming mechanism (11), the axis (13) of rotation of which is at an angle with respect to the axis (8) of the jaw to be cut, where the forward motion of the feeding forming mechanism is a rotatable oscillating motion at a certain angle; advancing of the jaw (3) to be cut towards the cutting tool (15); cutting of the first tooth space; stopping of the advanced motion; axially moving of the jaw (3) to be cut to a distance equal to one pitch of the conical thread; reversing of the forward rotating motion and cutting of the second tooth space; stopping of the forward rotating motion; and axially moving of the jaw (3) to a distance of one pitch of the conical thread.

4. A Device for cutting teeth on gripping jaws carrying out the method of claim 3, the device including a casing (10), on which feeding forming mechanisms connected to cutting mechanisms are mounted, the mechanisms being controlled by a hydraulic and an electric systems, **characterised in that** there are three pairs of mechanisms on the casing (10), each pair containing one feeding forming mechanism (11) and one cutting mechanism (12), where the feeding forming mechanism (11) is disposed in such a way that its axis (13) and the axis of rotation (14) of the cutting tool (15) lie in one plane, and the arrangements of the base support elements (22, 23) of the feeding forming mechanisms (11) with respect to the front parts of the cutting tools (15) for the second and for the third pair of mechanisms differ from the arrangements of the base support elements (22, 23) for the first pair of mechanisms by one third and two thirds, respectively, of the pitch of the conical thread.

5. A Device for cutting teeth on gripping jaws according to claim 4, **characterised in that** there is only one pair of mechanisms mounted on the casing (10), the pair including one feeding forming mechanism (11) and one cutting mechanism (12).

6. A Device for cutting teeth on gripping jaws according to claim 4, **characterised in that** the feeding forming mechanism (11) includes a carrier body (16) with a built-in cylindrical tailstock barrel (17), to which base positioning movable and immovable elements (21, 22, 23) are fixed, and a driving cylinder (25) is axially mounted to the tailstock barrel (17) and is immovably connected to a pitch dividing mechanism (28), and the carrier body (16) is accommodated in a bearing case (39) with a build-in feeding group (40).

7. A Device for cutting teeth on gripping jaws according to claim 4, **characterised in that** the base positioning elements are a tightening cylinder (18), an immovable base support (21), an immovable base support having a semicylindrical hole (22) and a movable base support (23) formed as a prism.

8. A Device for cutting teeth on gripping jaws according to claim 4, **characterised in that** the arrangement of the base supports (21, 22, 23) determines the position of the axis (8) of the jaw (3) to be cut and the angle of inclination of the teeth to be cut.

9. A Device for cutting teeth on gripping jaws according to claim 4, **characterised in that** the axis of the base support elements of the feeding forming mechanism (11) lies in one plane with the axis (14) of the cutting tool (15).

10. A Device for cutting teeth on gripping jaws according to claim 6, **characterised in that** the pitch dividing mechanism (28) includes a casing (29), in which a pitch templet (30) connected to a piston rod (31) of a driving cylinder (32) and to a cylindrical tailstock barrel (17) is mounted.

11. A Device for cutting teeth on gripping jaws according to claim 6, **characterised in that** the feeding group (40) is mounted in a bearing case (39), in which a rack (42) is built-in to the piston rod of a driving cylinder (41), the rack (42) being engaged to a gear wheel (43) fixed on a bearing journal (37).

12. A Device for cutting teeth on gripping jaws according to claim 4, **characterised in that** the cutting mechanism (12) includes a casing (46) attached to a base plate (48) by means of guides (49), and a spindle (17) resting on bearings within the casing (46) and having a cutting tool (15) mounted on, is driven by an electric driving group (53, 54, 55).

## Patentansprüche

1. Dreispannbackenfutter, umfassend einen Körper (1) mit drei Öffnungen (2), deren Achsen schräg bezüglich der Körperlängsachse verlaufen, wobei die Spannbacken (3) mit Zahnbereichen an deren Aussenfläche, die in das konische Gewinde eines Zahnrads (5) eingreift, in die Öffnungen eingebracht sind, und auf der gegenüberliegenden Seite zu den Zahnbereichen eine schräge Kontaktfläche (4) für den Kontakt zum Spannwerkzeug besteht, **dadurch gekennzeichnet, dass** alle Zähne in den Zahnbereichen der Spannbacken (3) einheitliche Geometrien, identische Ganghöhe und Form des Profils, ähnlich zu denen des konischen Gewindes des Zahnrads (5), in das sie eingreifen, besitzen, die Zähne auf einer zylindrischen Oberfläche (7) ausgebildet sind, deren Achse parallel zu der Achse (8) der Spannbacken (3) verläuft, wobei beide Achsen in einer Ebene, die durch deren Mittelsenkrechte hindurchgeht, liegen, und der Radius der zylindrischen Oberfläche (7) gleich dem minimalen Innenradius des konischen Gewindes ist, wobei die Zähne mit einer Krümmung (9), die durch die Rotation des Backens um eine Achse (13) mit einem Winkel bezüglich zu der Achse (8) des Spannbackens (3) festgelegt ist, gebogen eingeschnitten sind, und die Krümmung (9) einen Radius aufweist, der gleich dem minimalen Aussenradius des konischen Gewindes ist, wobei der Neigungswinkel der Zähne bezüglich der Längssachse (8) des Spannbackens (3) gleich dem Erhebungswinkel des konischen Gewindes ist, bestimmt durch dessen mittleren Radius.

2. Dreispannbackenfutter nach Anspruch 1 **dadurch gekennzeichnet, dass** die Zähne in dem Zahnbereich senkrecht zu der Längsachse (8) des Spannbackens (3) stehen.

3. Verfahren zum Schneiden von Zähnen auf Spannbacken nach Anspruch 1, umfassend die folgenden Schritte: Positionieren der Backen (3), Vorschieben dieser Backen in einen Schneidemechanismus (12), Stellen des Zufuhr- und Formmechanismus (11) auf eine Vorwärtsbewegung und des Schneidemechanismus (12) auf eine Rotationsbewegung, wobei die Rotationsachse parallel zu der Achse (8) des zu schneidenden Backens verläuft, **dadurch gekennzeichnet, dass** ein Backen (3) entlang seiner Längsachse in dem Zufuhr- und Formmechanismus (11) positioniert wird, dessen Rotationsachse (13) in einem Winkel bezüglich zu der Achse (8) des zu schneidenden Backens steht, wobei die Vorwärtsbewegung des Zufuhr-Form-Mechanismus eine drehbare, um einen bestimmten Winkel oszillierende Bewegung ist; Vorschieben des zu schneidenden Backens (3) in Richtung des Schneidewerkzeugs (15); Schneiden des ersten Zahnspalts; Stoppen der vorrückenden Bewegung; axiales Bewegen des zu schneidenden Backens (3) bis zu einer Entfernung, die gleich einer Ganghöhe des konischen Gewindes ist; Umkehren der Vorwärts- Rotationsbewegung und Schneiden des zweiten Zahnspalts; Stoppen der Vorwärts- Rotationsbewegung; und axiales Bewegen des Backens (3) bis zu einer Entfernung einer Ganghöhe des konischen Gewindes.

4. Vorrichtung zum Schneiden von Zähnen in Spannbacken zur Durchführung des Verfahrens nach Anspruch 3, wobei die Vorrichtung ein Gehäuse (10) umfasst, auf dem Zufuhr-Formmechanismen verbunden mit Schneidemechanismen befestigt sind, die Mechanismen durch ein hydraulisches und ein elektronisches System gesteuert werden, **dadurch gekennzeichnet, dass** sich drei Paare von Mechanismen auf dem Gehäuse (10) befinden, wobei jedes Paar einen Zufuhr-Form-Mechanismus (11) und einen Schneidemechanismus (12) enthält, wobei der Zufuhr-Form-Mechanismus (11) derart angeordnet ist, dass seine Achse (13) und die Rotationsachse (14) des Schneidwerkzeugs (15) in einer Ebene liegen, und die Anordnung der Basisstützelemente (22, 23) der Zufuhr-Form-Mechanismen (11) bezüglich der Vorderteile der Schneidwerkzeuge (15) für das zweite und dritte Paar der Mechanismen von den Anordnungen der Basisstützelemente (22, 23) für das erste Paar der Mechanismen um ein Drittel bzw. um zwei Drittel der Ganghöhe des konischen Gewindes unterschiedlich ist.

5. Vorrichtung zum Schneiden von Zähnen in Spannbacken nach Anspruch 4, **dadurch gekennzeichnet, dass** sich nur ein Paar der Mechanismen auf dem Gehäuse (10) befindet, wobei das Paar einen Zufuhr-Form-Mechanismus (11) und einen Schneidemechanismus (12) umfasst.

6. Vorrichtung zum Schneiden von Zähnen in Spannbacken nach Anspruch 4, **dadurch gekennzeichnet, dass** der Zufuhr-Form-Mechanismus (11) einen Trägerkörper (16) mit einer eingebauten, zylindrischen Reitstockhülse (17) umfasst, an die bewegliche und unbewegliche Basispositionierungselemente (21, 22, 23) befestigt sind, und ein Führungszylinder (25) axial an der Reitstockhülse (17) befestigt und unbeweglich mit einem Ganghöhen-Teilungs-Machanismus (28) verbunden ist, und der Trägerkörper (16) in einem Lagergehäuse (39) mit einer eingebauten Zufuhrgruppe (40) untergebracht ist.

7. Vorrichtung zum Schneiden von Zähnen in Spannbacken nach Anspruch 4, **dadurch gekennzeichnet, dass** die Basispositionierungselemente ein Spannzylinder (18), eine unbewegliche Basisstütze (21), eine unbewegliche Basisstütze mit einem halbzylindrischen Loch (22) und eine als Prisma geformte bewegliche Basisstütze (23) sind.

8. Vorrichtung zum Schneiden von Zähnen in Spannbacken nach Anspruch 4, **dadurch gekennzeichnet, dass** die Anordnung der Basisstützen (21, 22, 23) die Lage der Achse (8) des zu schneidenden Backens (3) und den Neigungswinkel der zu schneidenden Zähne bestimmt.

9. Vorrichtung zum Schneiden von Zähnen in Spannbacken nach Anspruch 4, **dadurch gekennzeichnet, dass** die Achse der Basisstützelemente des Zufuhr-Form-Mechanismus (11) in einer Ebene mit der Achse (14) des Schneidwerkzeugs (15) liegt.

10. Vorrichtung zum Schneiden von Zähnen in Spannbacken nach Anspruch 6, **dadurch gekennzeichnet, dass** der Ganghöhen-Teilungs-Mechanismus (28) ein Gehäuse (29) umfasst, in dem ein Ganghöhen-Templet (30) verbunden mit einer Kolbenstange (31) eines Führungszylinders (32) und mit einer zylindrischen Reitstockhülse (17) befestigt ist.

11. Vorrichtung zum Schneiden von Zähnen in Spannbacken nach Anspruch 6, **dadurch gekennzeichnet, dass** die Zufuhrgruppe (40) in einem Lagergehäuse (39) untergebracht ist, in dem ein Gestell (42) an die Kolbenstange eines Führungszylinders (41) eingebaut ist, wobei das Gestell (42) in ein Zahnrad (43) eingreift, das an einem Achshals (37) befestigt ist.

12. Vorrichtung zum Schneiden von Zähnen in Spannbacken nach Anspruch 4, **dadurch gekennzeichnet, dass** der Schneidemechanismus (12) ein Gehäuse (46) umfasst, das an eine Basisplatte (48) über Führungen (49) angebracht ist, und eine Spindel (17), die auf Lagern innerhalb des Gehäuses (46) steht und ein darauf errichtetes Schneidwerkzeug (15) besitzt, durch eine elektrische Antriebsgruppe (53, 54, 55) angetrieben wird.

## Revendications

1. Mandrin de serrage à trois mors, comprenant un corps (1) ayant trois ouvertures (2), dont les axes sont inclinés par rapport à l'axe longitudinal du corps, tandis que des mors de serrage (3) ayant des secteurs dentés sur leur surface externe engrenés avec le filetage conique d'un engrenage (5) sont logés dans les ouvertures, et sur la face opposée des secteurs dentés se trouve une surface de contact inclinée (4) pour le contact avec l'outil serré, **caractérisé en ce que** toutes les dents dans les secteurs dentés des mors de serrage (3) ont des géométries uniformes et ont un pas et une forme de profil identiques, semblables à ceux du filetage conique de l'engrenage (5), dans lequel elles sont engagées, les dents étant formées sur une surface cylindrique (7), dont l'axe est parallèle à l'axe (8) du mors de serrage (3), tandis que les deux axes sont situés dans un plan passant par leur médiatrice, et que le rayon de la surface cylindrique (7) est égal au rayon interne minimal du filetage conique, tandis que les dents ont une découpe arquée ayant une courbure (9) déterminée par la rotation du mors autour d'un axe (13) sous un certain angle par rapport à l'axe (8) du mors de serrage (3), et que la courbure (9) a un rayon égal au rayon externe minimal du filetage conique, l'angle d'inclinaison des dents par rapport à l'axe longitudinal (8) du mors de serrage (3) étant égal à l'angle d'élévation du filetage conique, déterminé par son rayon moyen.

2. Mandrin de serrage à trois mors selon la revendication 1, **caractérisé en ce que** les dents dans le secteur denté sont perpendiculaires à l'axe longitudinal (8) du mors de serrage (3).

3. Procédé pour la coupe de dents sur des mors de serrage selon la revendication 1, comportant les étapes suivantes: positionnement des mors (3), avancement de ceux-ci vers un mécanisme de coupe (12), mise en marche d'un mécanisme de façonnage à avancement (11) dans un mouvement en avant et du mécanisme de coupe (12) en mouvement rotatif, l'axe de rotation étant parallèle à l'axe (8) du mors à couper, **caractérisé en ce qu'**un mors (3) est positionné le long de son axe longitudinal dans le mécanisme de façonnage à avancement (11), dont l'axe (13) de rotation forme un angle avec l'axe (8) du mors à couper, tandis que le mouvement d'avancement du mécanisme de façonnage à avancement est un mouvement oscillant orientable selon un certain angle; avancement du mors (3) à couper en direction de l'outil de coupe (15); coupe de l'espace du premier entredent; interruption du mouvement d'avancement; déplacement axial du mors (3) à couper sur une distance égale à un pas du filetage conique; inversion du mouvement rotatif avançant et coupe du deuxième entredent; interruption du mouvement rotatif avançant; et déplacement axial du mors (3) sur une distance d'un pas du filetage conique.

4. Dispositif pour la coupe de dents sur des mors de serrage mettant en oeuvre le procédé selon la revendication 3, le dispositif comportant un carter (10), sur lequel des mécanismes de façonnage à avancement connectés à des mécanismes de coupe sont montés, les mécanismes étant contrôlés par un système hydraulique et un système électrique, **caractérisé en ce qu'**il y a trois paires de mécanismes sur le carter (10), chaque paire contenant un mécanisme de façonnage à avancement (11) et un mécanisme de coupe (12), tandis que le mécanisme de façonnage à avancement (11) est disposé de telle manière que son axe (13) et l'axe de rotation (14) de l'outil de coupe (15) reposent dans un plan, et que les arrangements des éléments de support de base (22, 23) des mécanismes de façonnage à avancement (11) en ce qui concerne les parties frontales des outils de coupe (15) pour la deuxième et pour la troisième paire de mécanismes diffèrent des arrangements des éléments de support de base (22, 23) pour la première paire de mécanismes d'un tiers et de deux tiers, respectivement, du pas du filetage conique.

5. Dispositif pour la coupe de dents sur des mors de serrage selon la revendication 4, **caractérisé en ce qu'**il y a une paire de mécanismes montés sur le carter (10), la paire comportant un mécanisme de façonnage à avancement (11) et un mécanisme de coupe (12).

6. Dispositif pour la coupe de dents sur des mors de serrage selon la revendication 4, **caractérisé en ce que** le mécanisme de façonnage à avancement (11) comporte un premier corps (16) ayant une partie supérieure de contre-poupée cylindrique intégrée (17), à laquelle sont fixés des éléments de positionnement mobiles et immobiles (21, 22, 23), et un manchon d'entraînement (25) est monté axialement sur la barre de contre-poupée (17) et est connecté de manière immobile à un mécanisme diviseur de pas (28), et le corps support (16) est logé dans un boîtier d'appui (39) avec un groupe d'avancement intégré (40).

7. Dispositif pour la coupe de dents sur des mors de serrage selon la revendication 4, **caractérisé en ce que** les éléments de positionnement de base sont un manchon de serrage (18), un support de base immobile (21), un support de base immobile ayant un alésage semi-cylindrique (22) et un support de base mobile (23) ayant la forme d'un prisme.

8. Dispositif pour la coupe de dents sur des mors de serrage selon la revendication 4, **caractérisé en ce que** l'arrangement des supports de base (21, 22, 23) détermine la position de l'axe (8) du mors (3) à couper et l'angle d'inclinaison des dents à couper.

9. Dispositif pour la coupe de dents sur des mors de serrage selon la revendication 4, **caractérisé en ce que** l'axe des éléments de support de base du mécanisme de façonnage à avancement (11) se situe dans un plan avec l'axe (14) de l'outil de coupe (15).

10. Dispositif pour la coupe de dents sur des mors de serrage selon la revendication 6, **caractérisé en ce que** le mécanisme diviseur de pas (28) comporte un boîtier (29), dans lequel est monté un calibre de pas (30) connecté à une tige de piston (31) d'un manchon d'entraînement (32) et à une partie supérieure de contre-poupée cylindrique (17).

11. Dispositif pour la coupe de dents sur des mors de serrage selon la revendication 6, **caractérisé en ce que** le groupe d'avancement (40) est monté dans un boîtier d'appui (39), dans lequel une crémaillère (42) est intégrée au piston d'un manchon d'entraînement (41), la crémaillère (42) étant en prise sur un engrenage (43) fixé sur un tourillon (37).

12. Dispositif pour la coupe de dents sur des mors de serrage selon la revendication 4, **caractérisé en ce que** le mécanisme de coupe (12) comporte un boîtier (46) fixé à une plaque de base (48) au moyen de guides (49), et une broche (47) reposant sur des appuis dans le boîtier (46) et sur laquelle est monté un outil de coupe (15), est entraînée par un groupe d'entraînement électrique (53, 54, 55).
